(19)

Europäisches Patentamt
European Patent Office
Office européen des brevets

(11) **EP 3 537 413 A1**

(12) **EUROPEAN PATENT APPLICATION**

(43) Date of publication:
**11.09.2019 Bulletin 2019/37**

(51) Int Cl.:
***G09C 1/00*** (2006.01)

(21) Application number: **18000240.4**

(22) Date of filing: **09.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Karlsruher Institut für Technologie 76131 Karlsruhe (DE)**

(72) Inventors:
• **Golanbari, Mohammed Saber 76227 Karlsruhe (DE)**

• **Kiamehr, Saman 71229 Leonberg (DE)**
• **Bishnoi, Rajendra 76676 Graben-Neudorf (DE)**
• **Tahoori, Mehdi 76139 Karlsruhe (DE)**

(74) Representative: **Müller-Boré & Partner Patentanwälte PartG mbB Friedenheimer Brücke 21 80639 München (DE)**

(54) **RELIABLE LOW-POWER MEMORY-BASED PUF ARCHITECTURE**

(57)     Summarizing the invention, a circuit for generating a bit value to be used in a unique identifier is provided. The circuit is configured to operate in a charge mode and the circuit comprises: a first electronic switch, a second electronic switch and a third electronic switch; a first state node connected to the first electronic switch, a second state node connected to the second electronic switch and a common source node connected to both the first electronic switch and the second electronic switch, wherein the common source node is connected to ground via the third electronic switch; a charge component connected to the first electronic switch and the second electronic switch; wherein in the charge mode: the first electronic switch and the second electronic switch are initially in an off state; the third electronic switch is in an off state so that the common source node is disconnected from the ground; the first state node and the second state node are charged by the charge component until either the first electronic switch or the second electronic switch reaches an on state; and wherein the bit value is based on a first voltage level at the first state node and a second voltage level at the second state node.

Figure 1

EP 3 537 413 A1

**Description**

Technical Field

The following description relates to a circuit used in a PUF design for generating a unique identifier.

Background

The number of connected devices has been growing tremendously over the last decade. High security and energy efficiency are the major requirements for such devices. In secure systems, one of the essential requirements is the generation and storage of secret keys, which could be used in cryptographic algorithms, for device identification, or preventing counterfeit devices. Non-volatile memory is typically used to store the secret keys, but this approach is very expensive and vulnerable to physical and software attacks.

A promising alternative solution for generation and storage of the secret keys is to use Physical Unclonable Functions (PUFs), which derive secret keys from unique physical characteristics of the system instead of actually storing it. For instance, a PUF could generate a unique device identifier or fingerprint based on the intrinsic uncontrollable manufacturing process variation.

A circuit can be used to generate a unique identifier based on the physical characteristics of the transistors in it, considering the impact of the process variation, which results in a mismatch between transistors. The process variation impact, and therefore the amount of mismatch between transistors, is unique for each manufactured cell. Therefore, it leads to a unique identifier. Furthermore, the process variation impact cannot be copied to another cell as it is inherent to the transistors. Therefore, the generated identifier is a unique number per device. A common approach is to use the power-up values of static random-access memory (SRAM) arrays as the device identifier. The difference between the strength of the transistors in an SRAM cell due to process variation together with the feedback loops in the SRAM cell could strongly bias the power-up value of the cell towards either "zero" or "one". Therefore, the impact of the process variation on the SRAM cells could be leveraged to generate a unique identifier by powering up.

When the secret key is required in a system, the PUF is invoked by a challenge (i.e. input), and the PUF response is collected as the secret key. As this process is performed in different operating and environmental conditions, the PUF response is subject to variations. The quality of a PUF is mainly measured based on uniqueness and reliability metrics. The uniqueness metric describes the unpredictability of the responses of different PUF instances, whereas the reliability metric explains the stability of the PUF response for the same chip in the presence of environmental variations such as temperature, power supply, and noise (both internal and external). This is a crucial characteristic of a PUF design, as the generated identifier needs to be used in different conditions e.g. for authentication and cryptography purposes.

In addition to the key requirement of secure and secret unique chip identifier, many emerging application domains have stringent energy constraints. As mentioned, the reliability of the SRAM-based PUF designs is sensitive to the environmental variations and to the noise especially in low supply voltage ranges. Indeed, a conventional PUF design cannot generate a reliable response at low supply voltage due to the impact of the noise. Internal and external noise sources can slightly affect the current and voltage of different circuit nodes. Unfortunately, such small transient variations may be decisive at low supply voltage because of the higher sensitivity of the circuit to variations at low voltages, i.e. about 0.4 or 0.5 V.

Accordingly, reliability is a major concern for such designs, in particular, for the low supply voltage values. There is a need for a PUF circuit capable of generating a reliable and stable response for low-power design applications.

Summary

It is an object of the invention to provide a PUF design that is suitable for low-power applications, in particular, a new memory-based PUF design which provides higher reliability at low supply voltage values.

The achievement of this object in accordance with the invention is set out in the independent claims. Further developments of the invention are the subject matter of the dependent claims.

According to one aspect, a circuit for generating a bit value to be used in a unique identifier is provided. The circuit is configured to operate in a charge mode and the circuit comprises:

a first electronic switch, a second electronic switch and a third electronic switch;
a first state node connected to the first electronic switch, a second state node connected to the second electronic switch and a common source node connected to both the first electronic switch and the second electronic switch, wherein the common source node is connected to ground via the third electronic switch;
a charge component connected to the first electronic switch and the second electronic switch;

wherein in the charge mode:

the first electronic switch and the second electronic switch are initially in an off state;
the third electronic switch is in an off state so that the common source node is disconnected from the ground;
the first state node and the second state node are charged by the charge component until either the first electronic switch or the second electronic switch reaches an on state;

and wherein the bit value is based on a first voltage level at the first state node and a second voltage level at the second state node.

The circuit described in the following is used as generator of a random bit value. A bit is a unit of data that can have only one of the two values of a binary state, which are in the following also referred to as "complementary values". Usually these values are denoted with 0 and 1: 0 is the complementary value of 1 and 1 is the complementary value of 0. Therefore, a bit value can be either 0 or 1 and, respectively, the complementary bit value will be 1 or 0.

The uniqueness of the identifier has to be understood in a statistical sense, meaning that the probability P of generating two identical identifiers is not exactly zero but it is negligible for the intended purposes, e.g. lower than $10^{-77}$. In order to achieve this uniqueness, the identifier must be formed by a plurality of bit values, wherein the number N of bit values must be higher than a threshold that depends on the limit for the probability P, with $P=2^{-N}$. For example, N could be 128 or 256.

Accordingly, N circuits, each generating a bit value, are needed for a PUF design and each circuit can be referred to as a PUF circuit or a PUF cell. Exemplarily, the PUF circuit may be memory-based, i.e. it could be a memory cell, such as an SRAM cell. A conventional SRAM cell is made up of six transistors, four of which forming two crosscoupled inverters for driving two state nodes Q and QB. When the SRAM cell is powered up, given the unavoidable manufacture differences between the transistors and other factors like noise, one of the two inverters will be activated faster and there will be a difference in voltage between the state nodes Q and QB. Based on which node is at a higher voltage, a bit value of 0 or 1 can be assigned to the cell.

As explained, the bit value generated by one PUF circuit (also called PUF value or PUF response) is combined with a plurality of other bit values obtained by PUF circuits to form a unique identifier. In the following it is described how a reliable bit value is obtained even at low voltage.

The circuit comprises at least a first electronic switch and a second electronic switch. An electronic switch has an "on" state, in which current can flow through the switch, and an "off" state, in which, ideally, current cannot flow through the switch. However, even in the off state, there may be leakage currents flowing within the switch. The electronic switch passes from the off state to the on state when a voltage applied to it is greater than a predetermined threshold. The threshold is an intrinsic property of the electronic switch, which is affected by intrinsic manufacturing process variation during the fabrication. An example of an electronic switch is a transistor. The first electronic switch and the second electronic switch may be chosen to be nominally identical, e.g. the same model of the same manufacturer.

Exemplarily, the on/off state of the electronic switch may be set by an external signal. The external signal may be a digital signal that can be in a high state or a low state. A bit value is used to denote the logic level, i.e. the state, of the digital signal, wherein a logic level is usually represented by the voltage level of the signal, i.e. the difference between the signal voltage and the reference ground voltage.

Accordingly, setting the signal to the high state means applying a given voltage, e.g. a voltage approximately equal to the supply voltage or a voltage above a threshold percentage of the supply voltage, such as above about 85%, about 90% or about 95% of the supply voltage. Instead the low state corresponds to a voltage at about the reference point of 0 V, e.g. below a threshold percentage of the supply voltage, such as below about 5%, about 10% or about 15% of the supply voltage. Exemplarily, the high state or high logic level may be denoted with a '1' and the low state or low logic level may be denoted with a '0'. According to how the logic of the specific electronic switch is built, the electronic switch may be active low, i.e. turned on by a low state external signal, or active high, i.e. turned on by a high state external signal. The same applies to other circuit elements.

The circuit comprises at least three nodes, a first state node connected to the first electronic switch, a second state node connected to the second electronic switch and a common source node connected to both the first electronic switch and the second electronic switch. The term node in an electrical circuit generally indicates a junction, connection, or terminal where two or more circuit elements are connected or joined together. In the following, unless specified otherwise, the term "connected" used in relation to a first element and second element means that the two elements are directly connected, i.e. there are no other circuit components than wiring between the first element and the second element.

The state nodes are the nodes whose voltage levels determine the state of the circuit, i.e. the bit value that is generated by the circuit, as will be explained below. The first state node may also be connected to the second electronic switch and the second state node may also be connected to the first electronic switch. However, it is the first state node that determines the activation of the first electronic switch and it is the second state node that determines the activation of the second electronic switch.

The common source node is a node common to the first and second electronic switches. In addition to the first electronic switch and the second electronic switch, the circuit comprises at least a third electronic switch that is configured to connect or disconnect the common source node to ground. By "ground" the reference point at 0 V is meant. When the common source node is connected to the ground, it is also at 0 V.

Exemplarily, if the first electronic switch and second electronic switch are metal-oxide-semiconductor field-effect transistors (MOSFETs), the first state node may be connected to the gate of the first transistor and to the drain of the second transistor, while the common source node may be connected to the source of the first transistor. Similarly, the second state node may be connected to the gate of the second transistor and to the drain of the first transistor, while the common source node may be connected to the source of the second transistor.

The circuit further comprises a charge component. In the context of this application, unless otherwise specified, the term "component" is used to denote one or more elements of the circuit that provide a given function and achieve a given purpose. Accordingly, an element could be part of more than one component when serving different purposes. Further, there is no strict distinction between what is part of the component and what is connected and/or in a functional relationship with the component. In particular, the term "component" should not be construed as a pre-built, fixed entity that is then assembled with other components to form the circuit. A component is a functionally-defined ensemble of circuit elements and does not imply a physical isolation of those elements from the rest of the circuit.

The charge component is connected to the first electronic switch and the second electronic switch. The charge component comprises elements, which may include one or more electronic switches, that fulfill the role of the charge component. The charge component is configured to charge the first and second reference nodes, as explained in more detail below.

The connection between the charge component and the first electronic switch includes, i.e. passes through, the first state node, and the connection between the charge component and the second electronic switch includes, i.e. passes through, the second state node. In other words, the first state node is a junction between at least one element of the charge component and the first electronic switch and the second state node is a junction between at least one element of the charge component and the second electronic switch.

It can also be said that the charge component comprises the first electronic switch and the second electronic switch, i.e. that the two switches are part of the charge component. In this wording, the elements of the charge component for charging the state nodes are in addition to the first and second electronic switches.

The circuit is configured to operate in a charge mode in which the state nodes are charged. In the charge mode (also referred to as charge phase in the following) the first electronic switch and the second electronic switch start by being in the off state.

Also the third electronic switch is in the off state at the beginning and it remains in the off state for the whole charge phase. When the third electronic switch is in the off state, the connection between the common source node and the ground is cut, i.e. the common source node cannot discharge if it gets charged. In other words, the common source node can be at a non-zero voltage. Accordingly, the third electronic switch is configured to disconnect the common source node from the ground. The state of the third electronic switch may be controlled by an external signal; if the third electronic switch is e.g. active high, the external signal is in the low state to keep the third electronic switch off.

The charge component is configured to charge the first state node and the second state node. This means that the elements of the charge component are activated, e.g. by receiving an external signal in the low state. Consequently, the charge component starts charging the first state node and the second state node at the same time. The voltage level at the state nodes (and respectively switches) grows with time from 0 V upward, until one of the switches reaches its threshold voltage.

Two stages can be identified when the circuit operates in charge mode, namely in the charge phase. In the first stage, the voltage of the state nodes and, thus, of the electronic switches, while increasing, is below the threshold for the electronic switches. Accordingly, the electronic switches are not conducting, however, as explained, in the off state there are leakage currents within the electronic switches. Since the common source node is disconnected from the ground, any charge passing through the first electronic switch and the second electronic switch increases the voltage at the common source node.

Therefore, on one hand the voltage applied at the state nodes tends to bring the first and second electronic switches in the on state, and on the other hand, the voltage accumulating at the common source node tends to keep the first and second electronic switches in the off state. In other words, the voltage at the state nodes, which are each located on the same side of the respective electronic switches, contributes to going beyond the threshold voltage of the electronic switches. Instead, the voltage at the common source node, which is located at the opposite side of the electronic switches with respect to the state nodes, gives a "negative" contribution or feedback.

Accordingly, the common source node cut off from the ground by the third electronic switch is in a negative feedback relation to the electronic switches: the leakage currents in the electronic switches increase the voltage at the common source node but, in turn, the voltage at the common source node prevents the currents in the electronic switches from increasing. This is because the voltage at the common source node maintains the electronic switches in the off state for a longer time by "counteracting" the voltage increase at the state nodes, whereas the current in the electronic switches would increase if they were in the on state.

Therefore, the role of the third electronic switch is to allow charging of the common source node in order to keep the first electronic switch and the second electronic switch in the off state longer. Accordingly, in the following, the third electronic switch may also be referred to as the keeper component.

In the second stage of the charge phase, the voltages of the state nodes are eventually increased such that one of the first electronic switch and the second electronic switch starts conducting, i.e. reaches the on state. As explained above, the manufacturing process leads inevitably to a mismatch between the electronic switches, even if they are chosen to be in principle identical. This means that, although the threshold voltage of the two electronic switches is nominally identical, in reality there is a small difference.

Hence, either the first electronic switch or the second electronic switch turns on before the other one. The accumulated charge of the state node that discharges through the activated electronic switch is drained through the conducting electronic switch and the voltage at the given source node drops. Consequently, the voltage at the common source node is increased. Thus, in virtue of the connection between the first electronic switch and the second electronic switch via the common source node, the activation of one of the electronic switches prevents the activation of the other one of the electronic switches. In other words, the other electronic switch is kept in the off state and the corresponding state node does not discharge. It should be noted that the state node that turns on a given electronic switch, may discharge through the other electronic switch. Namely, the first state node may turn on the first electronic switch, causing the second state node to discharge via the first electronic switch. Similarly, the second state node may turn on the second electronic switch, causing the first state node to discharge via the second electronic switch.

Accordingly, there is a clear difference between the voltage level at the first state node and the second state node: the voltage at one state node eventually drops to the voltage of the common source node and the voltage at the other state node keeps being increased by the charge component.

To summarize, the charge phase starts with the first electronic switch and the second electronic switch being off, as well as the voltage levels at the first state node and the second state node being substantially equal, and ends with only one of the electronic switches being on and a distinct separation between the voltage levels at the state nodes. The difference between the voltage levels is exactly what is needed to determine a bit value for the PUF circuit. Exemplarily, if the voltage level at the first state node is greater than the voltage level at the second state node, the bit value may be set to 1 and, if the voltage level at the second state node is greater than the voltage level at the first state node, the bit value may be set to 0. The converse convention may of course also be used.

As discussed above, given the applications of the unique identifier to be generated with the PUF design, the output of the PUF circuit must be reliable, i.e. not influenced by factors other than the intrinsic process variation such as noise, which are mutable. In the PUF circuit described above, the impact of the noise is suppressed by keeping the electronic switches in the off state as long as possible. Indeed, the electronic switches, when off, have a high resistance, i.e. act as active loads, and this reduces the impact of noise on the electronic switches. In particular, delaying the activation of one of the electronic switches allows the voltage levels at the state nodes to increase up to a given value. Accordingly, after the separation of the voltage levels, the difference between the two levels is large enough that the effect of noise is reduced or negligible.

In other words, the PUF circuit is noise-resilient and, thus, generates a reliable output for a unique identifier thanks to the negative feedback mechanism created by the common source node disconnected from ground by the keeper component. Accordingly, the separation in the voltage levels is due only to the intrinsic differences in the electronic switches and is not affected by noise. Therefore, the reliability of the unique identifier is improved, in particular for low-power applications (e.g. in the range 0.4 V - 0.6 V) but also for higher supply voltages (e.g. in the range 0.6 V - 1 V). The voltage may exemplarily be supplied to the charge component, the keeper component and the amplifier component. In other examples, the voltage may also be supplied to the access component.

The above-described design may be especially suitable for a near-threshold voltage range, i.e. a range in which the supply voltage value is close to the threshold voltage value of the first and second electronic switches. For example, the supply voltage value may lie in a range between about the threshold voltage value and about 1.5 times the threshold voltage value, i.e. $V_{th} \leq V_{supply} \leq 1.5\ V_{th}$. Given that the threshold voltage value of modern transistors is approximately 0.4V, the near-threshold voltage range may be e.g. 0.4 V - 0.6 V. If the electronic switches were based on a different technology with a different threshold voltage value, the near-threshold voltage range would correspondingly be different.

Since the charge component may also comprise one or more electronic switches, the separation in the voltage levels may depend on the intrinsic differences among more electronic switches and not just the first electronic switch and the second electronic switch. In particular, if the charge component comprises two electronic switches, each one for charging a respective state node, the voltage levels at the state nodes will depend also on the characteristics of these two charging electronic switches.

Thus, in the PUF circuit according to the invention, the random variation of the electronic switches causes two distinctive output voltage levels and the impact of noise is suppressed by employing active loads maintained by a negative feedback mechanism.

According to a preferred embodiment, the circuit is further configured to operate in an amplification mode and the circuit further comprises:

an amplifier component connected to the first electronic switch and the second electronic switch; and
an access component connected to the first state node and to the second state node;
and wherein in the amplification mode:

the third electronic switch is in an on state so that the common source node is connected to the ground;
the first voltage level and the second voltage level are amplified by the amplifier component to a high logic level and a low logic level;
at least one of the amplified first voltage level and the amplified second voltage level are read via the access component; and
the bit value is a first value when the amplified first voltage level is greater than the amplified second voltage level and the bit value is a second value when the amplified second voltage level is greater than the amplified first voltage level.

The function of the amplification mode is to bring the first voltage level and the second voltage level to recognizable logic levels 0 or 1, so that the information about the state nodes can be interpreted properly by the access component and possibly by logic outside the PUF cell.

The amplifier component is connected to the first electronic switch and the second electronic switch. The amplifier component is also connected to the first state node and the second state node.

As discussed above for the charge component, it may also be said that the amplifier component comprises the first electronic switch and the second electronic switch. Accordingly, the first electronic switch and the second electronic switch may be part of both the charge component and the amplifier component.

In one example, the amplifier component may comprise a fourth electronic switch and a fifth electronic switch which may form two back-to-back connected inverters together with the first electronic switch and the second electronic switch.

The access component is connected to the first state node and to the second state node. In one example the access component may comprise two transistors, each one connected to a state node. In another example, the access component may comprise two transmission gates, each one connected to a state node.

While the circuit operates in the amplification mode, i.e. during the amplification phase, the third electronic switch is configured to connect the common source node to the ground. Accordingly, the third electronic switch must be in a conducting state. The third electronic switch may be switched on by an external signal e.g. in a high state.

The amplifier component is configured to amplify the first voltage level and the second voltage level each to a logic level. "Amplifying" has to be understood in this context as amplifying the difference between the first voltage level and the second voltage level, so that the lower one reaches e.g. the reference of 0 V (corresponding to the logic level of 0) and the higher one reaches the voltage corresponding to the logic level of 1, e.g. 1 V or, for low-power applications, 0.5 V. The actual voltage value depends on the circuit design and on the threshold voltages of the electronic switches. Accordingly, the voltage values herein are merely provided as examples. Thus, the amplifier component behaves according to a positive feedback loop, in which the voltage difference causes the amplifier component to further increase the voltage difference. Exemplarily, the amplifier component may be a differential amplifier.

In particular, if the first electronic switch reaches the on state first in the charge phase, the amplifier component is configured to amplify the first voltage level to the low logic level and to amplify the second voltage level to the high logic level. Instead, if the second electronic switch reaches the on state first in the charge phase, the amplifier component is configured to amplify the first voltage level to the high logic level and to amplify the second voltage level to the low logic level.

In this preferred embodiment, the function of the first electronic switch and the second electronic switch is different in the charge mode and in the amplification mode. More specifically, the first electronic switch and the second electronic switch are configured to act as switches in the charge mode and to act as amplifiers in the amplification mode. The transistor is an example for an electronic switch capable of performing both as switch and as amplifier.

Since the charge mode is used for separating the voltage levels and preparing those for the amplifier mode that comes afterwards for increasing the difference, the charge mode may also be called precharge mode in the following.

The access component may be activated by an external signal, e.g. in a high state. After the first voltage level and the second voltage level have been amplified to reach the logic levels, the access component is configured to allow an external access to read at least one of the amplified first voltage level and the amplified second voltage level, namely of the logic levels at the first state node and at the second state node. In other words, at least one of the amplified first voltage level and the amplified second voltage level may be read through or via the access component.

In one example, the bit value may be taken as the logic level at the first state node. In this case, the bit value is 1 when the amplified first voltage level is greater than the amplified second voltage level, because the amplified first voltage level at the first state node is indeed the high logic level, i.e. 1. Conversely, the bit value is 0 when the amplified second voltage level is greater than the amplified first voltage level, because the amplified first voltage level at the first state node is indeed the low logic level, i.e. 0.

In another example, the bit value may be taken as the logic level at the second state node. In this case, the bit value is 0 when the amplified first voltage level is greater than the amplified second voltage level, because the amplified second voltage level at the second state node is indeed the low logic level, i.e. 0. Conversely, the bit value is 1 when the amplified second voltage level is greater than the amplified first voltage level, because the amplified second voltage level at the second state node is indeed the low logic level, i.e. 0.

Exemplarily the access component may be configured to allow an external reader component to read both the amplified first voltage level and the amplified second voltage level and combine them using logic in order to obtain a more stable output. Such an external reader component may be e.g. a sense amplifier, which is already provided in memory arrays. If the PUF circuit is placed in a memory array, the existent sense amplifier may be used to read the PUF response as well.

In light of the above description, the PUF circuit according to this embodiment may be controlled by one or more external signals. Exemplarily, three external signals may control the elements of the circuit, namely a first external signal controlling the charge component, a second external signal controlling the third electronic switch and the amplifier component, and a third external signal controlling the access component. Accordingly, the charge component may be activated by a first external signal in the charge mode; the third electronic switch and the amplifier component may be activated by a second external signal in the amplification mode; and the access component may be activated by a third external signal in the amplification mode.

In this case, considering an amplifier component according to one example above, namely comprising a fourth and a fifth electronic switch, the following issue may arise during the charge mode. If the voltage difference between the first state node and the second state node is larger than the threshold voltage of the fourth/fifth electronic switch, the fourth or fifth electronic switch may turn on and create a sneak path to the node at which the second external signal is given. However, during the charge mode, the amplifier component should not be activated and the third electronic switch should be off. In order to avoid this, the (nominal) threshold voltage of the first electronic switch and the second electronic switch may be chosen to be lower than a (nominal) threshold voltage of the fourth electronic switch and the fifth electronic switch.

Other configurations with a different number of external signals and/or different combinations of elements controlled by the same signal may be used.

In the amplification phase, an amplifier with positive feedback is activated to amplify the generated voltage levels into logic levels '0' and '1'. In this step, a noise cannot affect the response because the voltage levels are far from each other and are amplified in a positive feedback loop.

Another aspect of the present invention relates to an identification array comprising a plurality of circuits as described above. The identification array may further comprise a controller to activate separate rows of the array and to read the PUF responses.

In particular, the identification array may be a one-dimensional array or a two-dimensional array.

Further in particular, the number of the plurality of circuits may be 256.

Exemplarily, each circuit may be an SRAM cell and the identification array may be an SRAM array.

Yet another aspect of the present invention relates to an electronic device comprising the identification array as described above.

A further aspect of the present invention relates to a method for generating a bit value to be used in a unique identifier using a circuit comprising:

a first electronic switch, a second electronic switch and a third electronic switch;
a first state node connected to the first electronic switch, a second state node connected to the second electronic switch and a common source node connected to both the first electronic switch and the second electronic switch, wherein the common source node is connected to ground via the third electronic switch;
a charge component connected to the first electronic switch and the second electronic switch;
the method comprising operating the circuit in a charge mode by:

disconnecting, by the third electronic switch, the common source node from the ground;
charging, by the charge component, the first state node and the second state node until either the first electronic switch or the second electronic switch, which are initially both in an off state, reaches an on state;

determining the bit value based on a first voltage level at the first state node and a second voltage level at the second state node.

In particular, disconnecting the common source may comprise deactivating or leaving inactive, i.e. in the off state, the third electronic switch by means of an external signal appropriately set to a high state or a low state. Similarly, charging the state nodes may comprise activating the charge component by means of an external signal appropriately set to a high state or a low state, according to whether the elements of the charge component are active high or active low.

Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.

Figure 1 shows a block diagram of a PUF circuit.

Figures 2a and 2b show an example of a PUF circuit.

Figures 3a and 3b show an operation flow for generating a bit value in the PUF circuit.

Figure 4 shows a time evolution for different signals in a PUF circuit.

Detailed Description

In the following, a detailed description of examples will be given with reference to the drawings. It should be understood that various modifications to the examples may be made. Unless explicitly indicated otherwise, elements of one example may be combined and used in other examples to form new examples.

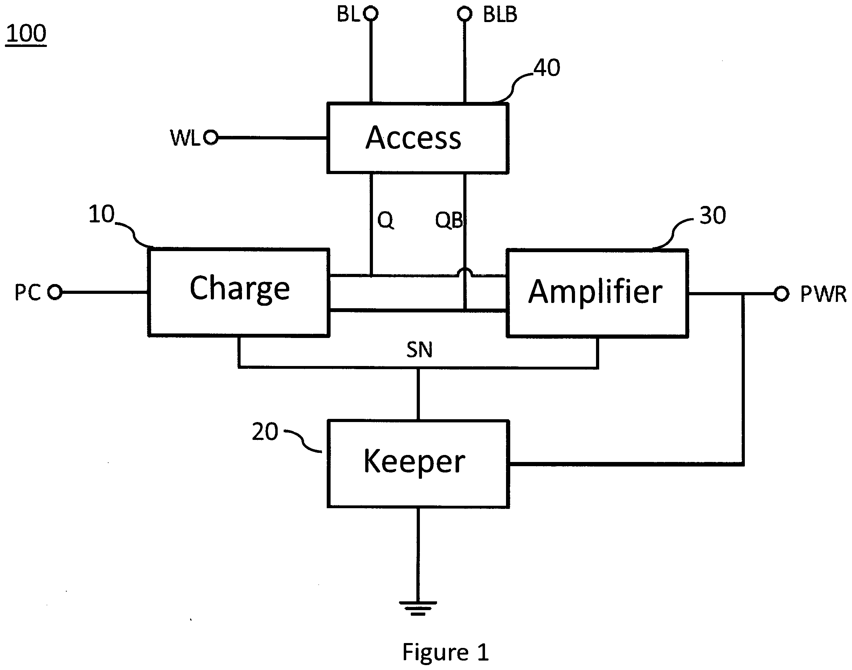

**Figure 1** shows a block diagram of an exemplary PUF circuit 100, in which different components are illustrated. The proposed PUF design comprises four different components, wherein the term "component" refers to functional parts of the circuit as explained above. Specifically, the PUF circuit 100 comprises a precharge component 10 (also called charge component), a keeper component 20, an amplifier component 30 and an access component 40.

The PUF circuit 100 further comprises at least a first state node QB, a second state node Q and a common source node SN. The precharge component 10 is connected to the first state node QB, the second state node Q and the common source node SN. The keeper component 20 is connected to the common source node SN. The amplifier component 30 is connected to the first state node QB, the second state node Q and the common source node SN. The access component 40 is connected to the first state node QB and the second state node Q.

The precharge component 10 is activated by a first external signal PC and is configured to charge the first state node QB and the second state node Q to different voltage levels distinguishable by the amplifier component 30. The keeper component 20 is activated by a second external signal PWR and is configured to allow charging of the common source node SN while the state nodes Q and QB are being charged. The amplifier component 30 is activated by the second external signal PWR and is configured to amplify the difference between the voltage levels at the state nodes Q and QB. The access component 40 is activated by a third external signal WL and is configured to access and allow reading of the amplified voltage levels at the state nodes Q and QB.

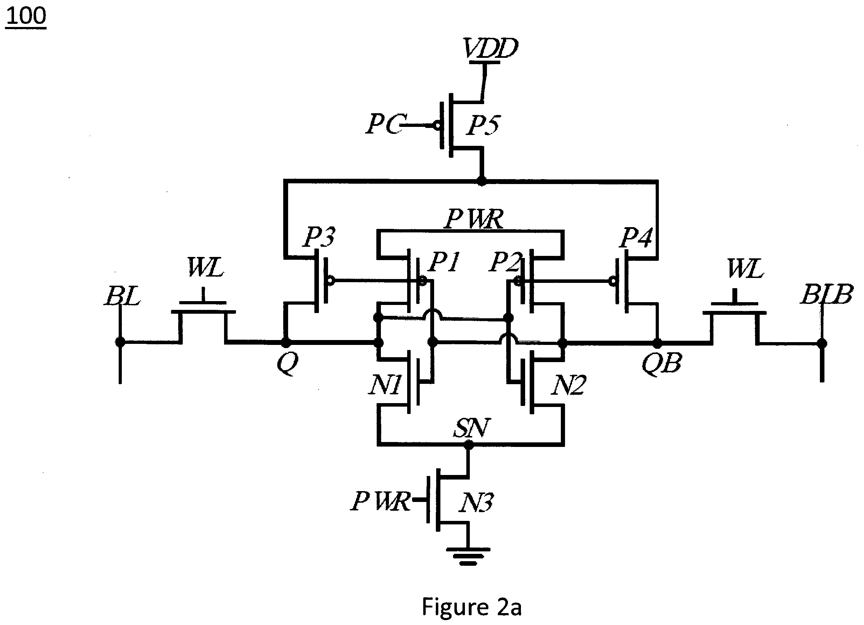

An example of a PUF circuit 100 comprising these components is shown in **Figure 2a,** however, different PUF circuits can be designed based on the diagram in Figure 1 because for each component several circuit implementations exist. In particular, the PUF circuit 100 is implemented as an SRAM cell.

The proposed PUF circuit in Figure 2a consists of 10 transistors, e.g. MOSFETs. The transistors are an example of electronic switches. Transistors P1, P2, N1, and N2 form a back-to-back inverter structure which has a positive feedback. P1 and P2 may be p-channel MOSFETs and N1 and N2 may be n-channel MOSFETs. Additionally, transistors P3 and P4 are in parallel to P1 and P2 except that P3 and P4 are connected to the drain supply VDD through P5, which is controlled by PC, while P1 and P2 are connected to PWR. P3 and P4 may also be p-channel MOSFETs. Further, the PUF circuit 100 includes another transistor, N3, and two additional transistors which may be n-channel MOSFETs.

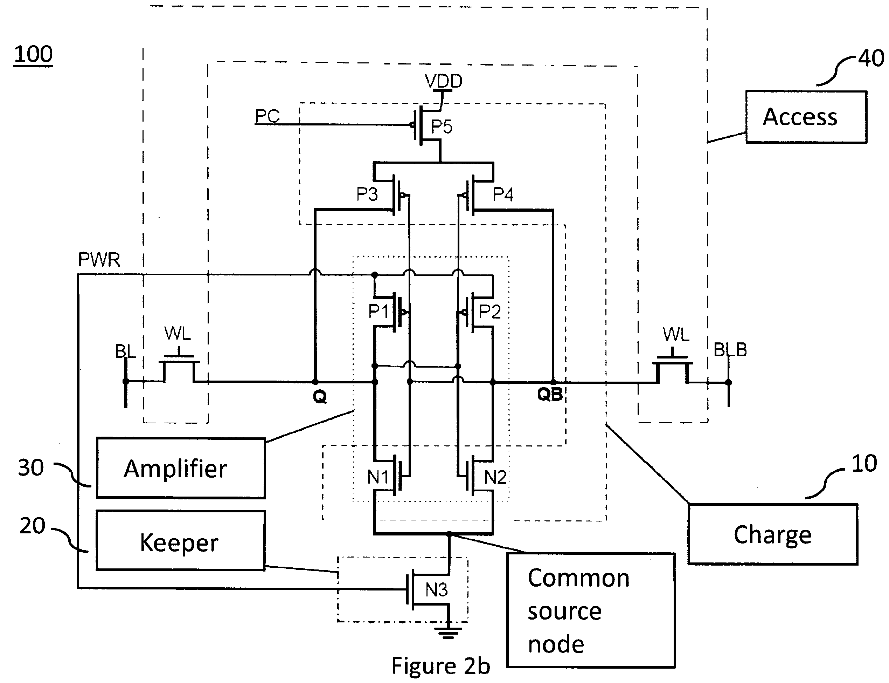

The components of the proposed PUF circuit 100 according to Figure 1 are identified with the actual elements of Figure 2a as shown in **Figure 2b.**

The precharge component 10 comprises at least a first electronic switch N1 (or first transistor) and a second electronic switch N2 (or second transistor). Further, the precharge component 10 comprises other three transistors, P3, P4 and P5. Accordingly, the precharge component 10 consists of five transistors (N1, P3, N2, P4, and P5) which are connected as two back-to-back connected inverters and one power control transistor, P5.

The keeper component 20 comprises a third electronic switch N3 (or third transistor).

The amplifier component 30 also comprises the first electronic switch N1 and the second electronic switch N2, with the addition of two other transistors P1 and P2, with which they form two back-to-back connected inverters. This structure can also be replaced by any amplifier with the ability to amplify a small voltage level difference into logic levels 0 and 1 (similar to a sense amplifier). Transistors pairs (N1, P1) and (N2, P2) form the amplifier block.

Finally the access component 40 comprises two simple NMOS access transistors used to enable the access to the state nodes Q and QB by the WL signal. As an alternative, the access component 40 can be implemented by transmission gates, or PMOS transistors.

Accordingly, as shown in Figure 2b, the common source node SN is connected to the sources of the first transistor N1 and the second transistor N2. The first state node QB is connected to the gate of the first transistor N1 and to the gate of transistor P3, while the second state node Q is connected to the gate of the second transistor N2 and to the gate of transistor P4. Further, the common source node SN is also connected to the third transistor N3.

The PUF circuit 100 of Figures 1, 2a and 2b is configured to operate in a charge mode, to which corresponds a charge phase, and an amplification mode, to which corresponds an amplification phase.

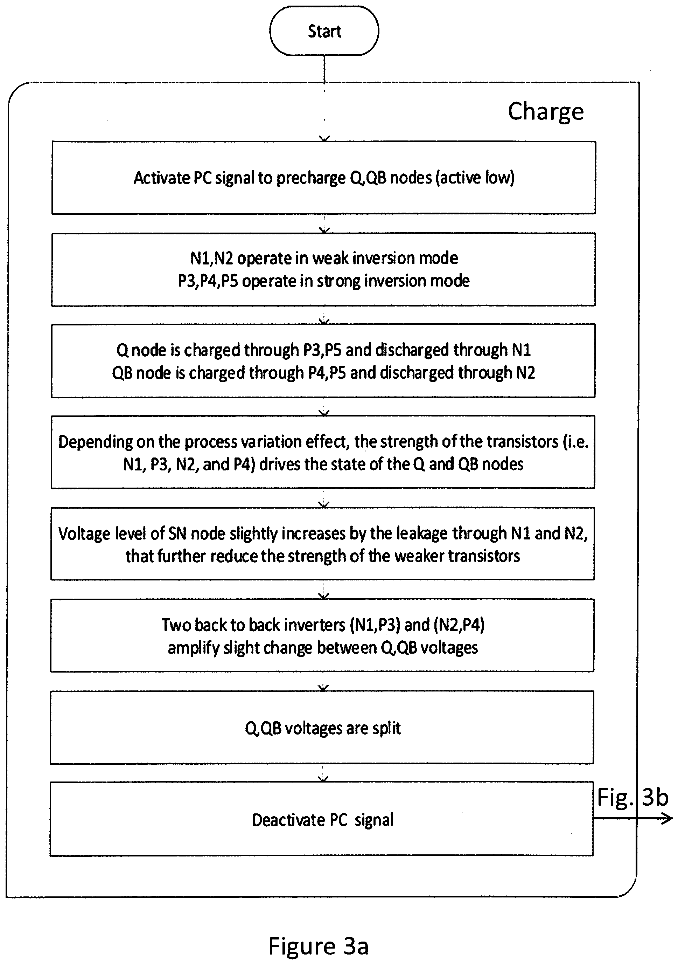

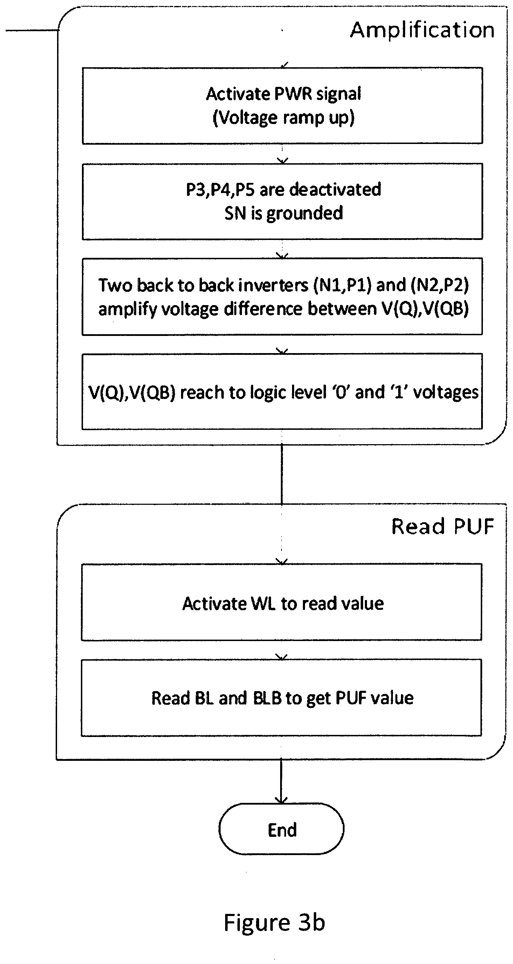

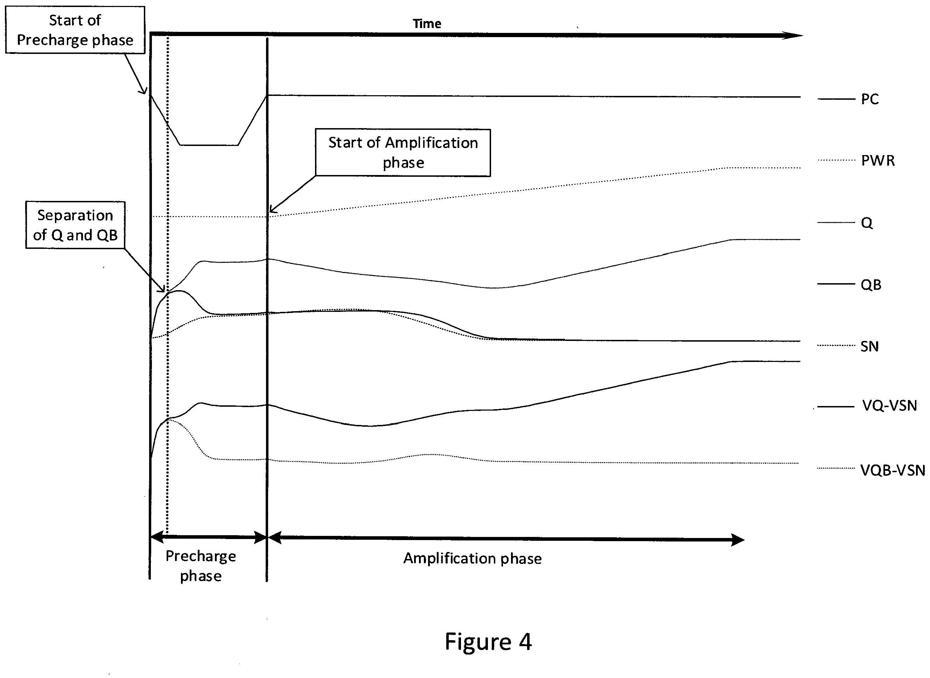

**Figures 3a and 3b** show the different steps in the charge phase and the amplification phase. **Figure 4** shows a time evolution for different signals in the PUF circuit 100 and complements the operation flow shown in Figures 3a and 3b. In particular, Figure 4 shows the voltage values as a function of time for the following quantities (from top to bottom): voltage of the PC signal, voltage of the PWR signal, voltage at the state nodes Q and QB, voltage at the common source node SN and gate-source voltage for transistors N1 and N2.

The charge phase, shown in Figure 3a, is started when the voltage of the node PC is set to zero, so that the PC signal activates the precharge component 10, which is active low. The charge phase (PC='0' and PWR='0') has two stages: the first stage includes what happens before the separation of Q and QB voltage levels, the second stage includes what happens after the separation of Q and QB voltage levels.

At the beginning of the precharge phase, transistors P3 and P4 are turned on because of the applied VDD and the low initial voltage at the state nodes Q and QB, and they start charging these nodes to a value between 0 V and VDD. In other words, P3, P4 and P5 are on and operate in strong inversion mode. In particular, P4 and P5 charge the first state node QB, and P3 and P5 charge the second state node Q. The final values of the voltage at the state nodes are strongly dependent on the strength of PMOS transistors P3 and P4, and hence their intrinsic process-due variations.

As the PWR signal is 0, the common source node SN, which is the common source between N1 and N2, is disconnected from the ground. Accordingly, the first and second transistors N1 and N2 are disconnected from the ground by the third transistor N3. The first and second transistors N1 and N2 are initially in an off state, due to the fact that the gate-source voltage is below threshold. Although ideally there should be no current passing through an off transistor, there are leakage currents therein even in this sub-threshold regime, also called weak-inversion mode. Accordingly, a transistor in an off state/weak-inversion mode has a leakage current, which depends exponentially on the gate-source voltage.

Since the common source node SN is disconnected from ground, any charge passing through N1 and N2 increases the voltage at the common source node SN. In particular, thus, the leakage current passing through the first and second transistors N1 and N2 increases the voltage at the common source node SN.

In the meantime, the increased voltage level at the state nodes QB and Q increases the gate-source voltage of transistors N1 and N2, respectively. However, this leads to an increase in the leakage current and, consequently, of the source voltage at the common source node SN. Therefore, the gate-source voltage remains below the threshold and the first and second transistors N1 and N2 are kept in the weak inversion mode for a longer period of time. Accordingly, the charge component during the first stage of the charge phase works according to a negative feedback loop: the increase of the voltage at the state nodes QB and Q causes an increase in the voltage at the common source node SN, which keeps the gate-source voltage of the transistors below threshold.

This eventually increases the sensitivity of the transistors N1 and N2 to process variation, leading to a clear signal separation by the end of the pre-charge phase, as shown in Figure 4.

Eventually, the second stage is reached, i.e. the voltages of QB and Q are increased such that one of the N1 and N2 transistors enters the super-threshold region and starts conducting. Therefore, the accumulated charge of the first state node QB or the second state node Q is drained through the conducting transistor and its voltage drops. Therefore, a clear separation between the voltage levels of Q and QB is observed.

For example, if the first transistor N1 is the one that starts conducting first, the accumulated charge at the second state node Q, which is connected to the drain of the first transistor N1, discharges. Vice versa, if the second transistor N2 is the one that starts conducting first, the accumulated charge at the first state node QB, which is connected to the drain of the second transistor N2, discharges.

The innovation of the proposed PUF design is that transistors N1, N2, P3, and P4 are operated such that a low-noise charge component is created. During the precharge step, a negative feedback mechanism is used to keep the first and second transistors N1 and N2 in the sub-threshold region. This is done by disconnecting the common source node SN from ground by turning off transistor N3.

As the common source node SN is slowly charged by leakage currents throughout the precharge phase, a negative feedback is provided which keeps transistors N1 and N2 in the weak-inversion mode for a longer time.

Additionally, because the voltage levels of Q and QB are almost identical before separation of voltage levels, both P3 and P4 behave as two low-noise active loads.

Therefore, the final bit value of the PUF circuit 100 is solely based on the process variation of N1, N2, P3, and P4 transistors.

Throughout the entire charge phase, the two back-to-back inverters formed by the couples of transistors (N1, P3) and (N2, P4) amplify the difference in voltage between Q and QB. This amplification is then enhanced in the amplification phase, as explained below. In particular, P3 and P4 may be preferably smaller transistors with respect to P1 and P2, because this means they have a larger process variation, which is needed for a more reliable PUF response. However, the smaller size of P3 and P4 also means that they cannot amplify the voltage difference as needed, and this is why the amplifier component is used. Exemplarily, the size of P3 and P4 may be four times smaller than the size of P1 and P2.

The precharge time is relatively short. It can be assumed that this time equals twice the delay of a minimum size inverter. After the completion of the precharge phase, the amplification phase starts, as shown in Figure 3b.

The back-to-back inverter forming the amplifier component 30 is activated by ramping the voltage of node PWR up to 1, while the PC signal is also set to 1. Accordingly, the amplifier component 30 comprising the transistors N1, N2, P1 and P2 is enabled and the third transistor N3 is also turned on, reducing the voltage of the common source node SN to 0 V. Simultaneously, P3, P4 and P5 are deactivated.

Exemplarily, P1 and P2 may be larger than P3, P4 and P5 in order to increase the sensitivity to the voltage difference between Q and QB and reduce the impact of process variation. The two back-to-back inverters N1, P1 and N2, P2 amplify the difference between the first voltage level at the first state node QB and the second voltage level at the second state node Q until one reaches the logic level 0 and the other the logic level 1. Specifically, the voltage level at the state node that discharged to the common source node SN during the charge phase is "amplified" to 0 and the voltage level at the state node that did not discharge during the charge phase is amplified to 1.

The last part of the amplification phase is the read state, in which the bit value that will be used in the unique identifier, i.e. the PUF value, is read via the access component 40 e.g. by a sense amplifier. The WL signal is ramped up to activate the access component 40, in particular the two access transistors. The values can be read at nodes BL and BLB and, according to which convention is chosen, the bit value may be the value read at BL or at BLB.

In the PUF circuit 100 of Figures 2a and 2b, if the voltage difference between Q and QB is larger than the threshold voltage of the transistors P1 and P2, one of P1 and P2 may turn on during the charge phase. This would open a sneak path to the PWR node, which is '0' at that moment. However, this can be prevented by setting the threshold voltage of N1 and N2 slightly less than the threshold voltage of P1 and P2. For example, threshold voltages may be as follows: Vth=0.5 V for N1, N2, - 0.5V for P3 and P4 and - 0.6 V for P1 and P2. Now, if, for example V(QB) = 0.7 V, it means that N1 is "on". Therefore, N1 exhibits low resistance, since it is turned on, which implies V(Q) ≈ V(SN). Further, since the gate-source voltage of N1 is slightly above Vth, V(QB) - V(SN) ≈ Vth, which means V(QB) - V(Q) ≈ Vth. Accordingly, the difference between V(Q) and V(QB) is approximately equal to Vth. If the difference between V(Q) and V(QB) increased to be significantly larger than Vth, transistor N1 would conduct a large current and SN would be charged very fast. This would again decrease the gate-source voltage of N1 to values close to the threshold voltage. As a result, during the second part of charge phase, the state nodes are separated by approximately Vth. P4 is also "on" with a gate-source voltage of -0.5V. Thus, the gate-source voltage of P2, which is the same as for P4, i.e. -0.5 V, is not sufficient to turn on P2 and make a sneak path.

To summarize, the precharge phase happens when the PC signal is activated (in the proposed circuit it is active low). The result of the precharge phase is that nodes Q and QB reach two different voltage levels. Then, the precharge component 10 is deactivated and amplification phase begins by activating the PWR signal, which turns on the amplifier component 30. Therefore, the voltage levels at Q and QB are amplified to logic level '0' and '1'. Finally the PUF bit values is read through access component by enabling WL signal. The PUF can be reset by setting WL signal to '1' and BL and BLB to 0. This removes any charge from nodes Q and QB.

Thanks to the keeper component 20, the effect of noise in the precharge phase is made negligible compared to the intrinsic process variations in the transistors. In particular, thanks to the keeper component 20, there is no current path from VDD to ground in any of the operation phases. Since in weak inversion mode close to the moderate inversion mode the noise impact on the transistors is less (because the signal gain is high), the proposed design, which keeps the transistors in weak-inversion mode for longer time, is noise resilient.

Therefore, a more reliable response of the PUF circuit 100 is obtained in comparison to conventional PUF circuits. In the following, simulation data about the performance of the presented PUF design are presented.

A reliability metric describing the stability of the response of a specific PUF at different readouts and over different operating conditions is calculated based on the Fractional Hamming Distance (FHD) of the PUF responses. The FHD explains the fraction of the bits which differs from one bit array (A) to another (B):

$$FHD(A,B) = \frac{1}{N}\sum_{i=1}^{N}|A_i - B_i|.$$

It is assumed that A and B are two PUF responses, each containing N bits. In the following N=256.

As already discussed, the response of a particular PUF array has to ideally remain the same at different readouts and across various environmental conditions, such as temperature variation and power supply noise. Here, the reliability of a PUF is defined as the average FHD between the different responses of the same PUF array subjected to different environmental and noise conditions. Please note that a lower reliability value represents a more stable PUF array, as the change in the response has to be as small as possible (close to zero). Herein, the first PUF response obtained at room temperature ($T$ = 25°C) is considered as the reference response for obtaining the FHD values.

The following table shows a comparison among a PUF array as described herein, a PUF array made of conventional SRAM cells having 6 transistors and a PUF array made of SRAM cells described in J.P. Kulkarni et al. "A 160 mV, fully differential, robust Schmitt trigger based sub-threshold SRAM" in ILSPED, 2007, pp. 171-176, which have 10 transistors as the proposed design.

| | VDD (V) | 6T SRAM | 10T SRAM (Kulkarni et al.) | Proposed | Improvement over 6T SRAM |
|---|---|---|---|---|---|
| Reliability (%) (worst case) | 1.0 | 5.64% | 4.39% | 2.14% | 62% (2.6x) |
| | 0.8 | 5.73% | 4.61% | 2.37% | 59% (2.4x) |
| | 0.6 | 5.75% | 4.62% | 2.59% | 55% (2.2x) |
| | 0.5 | 6.27% | 6.53% | 2.87% | 54% (2.2x) |
| | 0.45 | 7.17% | 7.60% | 3.13% | 56% (2.3x) |

In conclusion, the proposed PUF design is able to generate a reliable identifier, even at low supply voltage, as it suppresses the impact of noise and enhances the impact of intrinsic process variation.

**Claims**

1. A circuit (100) for generating a bit value to be used in a unique identifier, wherein the circuit (100) is configured to operate in a charge mode and the circuit comprises:

   a first electronic switch (N1), a second electronic switch (N2) and a third electronic switch (N3);
   a first state node (QB) connected to the first electronic switch (N1), a second state node (Q) connected to the second electronic switch (N2) and a common source node (SN) connected to both the first electronic switch (N1) and the second electronic switch (N2), wherein the common source node is connected to ground via the third electronic switch (N3);
   a charge component (10) connected to the first electronic switch (N1) and the second electronic switch (N2);
   wherein in the charge mode:

   the first electronic switch (N1) and the second electronic switch (N2) are initially in an off state;
   the third electronic switch (N3) is in an off state so that the common source node (SN) is disconnected from the ground;
   the first state node (QB) and the second state node (Q) are charged by the charge component (10) until either the first electronic switch (N1) or the second electronic switch (N2) reaches an on state;

   and wherein the bit value is based on a first voltage level at the first state node (QB) and a second voltage level at the second state node (Q).

2. The circuit (100) according to claim 1, wherein the circuit (100) is further configured to operate in an amplification mode and the circuit (100) further comprises:

an amplifier component (30) connected to the first electronic switch (N1) and the second electronic switch (N2); and

an access component (40) connected to the first state node (QB) and to the second state node (Q); and wherein in the amplification mode:

the third electronic switch (N3) is in an on state so that the common source node (SN) is connected to the ground;

the first voltage level and the second voltage level are amplified by the amplifier component (30) to a high logic level and a low logic level;

at least one of the amplified first voltage level and the amplified second voltage level are read via the access component (40); and

the bit value is a first value when the amplified first voltage level is greater than the amplified second voltage level and the bit value is a second value when the amplified second voltage level is greater than the amplified first voltage level.

3. The circuit (100) according to claim 2, wherein:

the first electronic switch (N1) and the second electronic switch (N2) are configured to act as switches in the charge mode; and

the first electronic switch (N1) and the second electronic switch (N2) are configured to act as amplifiers in the amplification mode.

4. The circuit (100) according to claim 2 or 3, wherein:

the charge component (10) is configured to be activated by a first external signal in the charge mode; the third electronic switch (N3) and the amplifier component (30) are configured to be activated by a second external signal in the amplification mode; and

the access component (40) is configured to be activated by a third external signal in the amplification mode.

5. The circuit (100) according to claim 4, wherein the supplied voltage has a value in a range between about a threshold voltage value of the first and second electronic switches (N1, N2) and about 1.5 times the threshold voltage value, optionally in the range 0.4 V - 0.6 V.

6. The circuit (100) according to any one of the above claims, wherein each electronic switch is a transistor.

7. An identification array comprising a plurality of circuits (100) according to any one of the above claims.

8. The identification array according to claim 7, wherein the number of the plurality of circuits is 256.

9. An electronic device comprising the identification array according to claim 7 or 8.

10. A method for generating a bit value to be used in a unique identifier using a circuit (100) comprising:

a first electronic switch (N1), a second electronic switch (N2) and a third electronic switch (N3); a first state node (QB) connected to the first electronic switch (N1), a second state node (Q) connected to the second electronic switch (N2) and a common source node (SN) connected to both the first electronic switch (N1) and the second electronic switch (N2), wherein the common source node (SN) is connected to ground via the third electronic switch (N3);

a charge component (10) connected to the first electronic switch (N1) and the second electronic switch (N2);

the method comprising operating the circuit (100) in a charge mode by:

disconnecting, by the third electronic switch (N3), the common source node (SN) from the ground; charging, by the charge component (10), the first state node (QB) and the second state node (Q) until either the first electronic switch (N1) or the second electronic switch (N2), which are initially both in an off state, reaches an on state;

determining the bit value based on a first voltage level at the first state node and a second voltage level at the second state node.

**11.** The method of claim 10, wherein the circuit further comprises:

an amplifier component (30) connected to the first electronic switch (N1) and the second electronic switch (N2); and

an access component (40) connected to the first state node (QB) and to the second state node (Q);

and wherein the method further comprises operating the circuit (100) in an amplification mode by:

connecting, by the third electronic switch (N2), the common source node (SN) to the ground;
amplifying, by the amplifier component (30), the first voltage level and the second voltage level to a high logic level and a low logic level;
reading, via the access component, at least one of the amplified first voltage level and the amplified second voltage level; and

wherein determining the bit value comprises determining that the bit value is a first value when the amplified first voltage level is greater than the amplified second voltage level and the bit value is a second value when the amplified second voltage level is greater than the amplified first voltage level.

**12.** The method according to claim 11, wherein:

the first electronic switch (N1) and the second electronic switch (N2) act as switches in the charge mode; and
the first electronic switch (N1) and the second electronic switch (N2) act as amplifiers in the amplification mode.

**13.** The method according to claim 11 or 12, further comprising:

activating, via a first external signal, the charge component (10) in the charge mode;
activating, via a second external signal, the third electronic switch (N3) and the amplifier component (30) in the amplification mode; and
activating, via a third external signal, the access component (40) in the amplification mode.

**14.** The method according to claim 13, wherein the supplied voltage has a value in a range between about a threshold voltage value of the first and second electronic switches (N1, N2) and about 1.5 times the threshold voltage value, optionally in the range 0.4 V - 0.6 V.

100

BL○        ○ BLB

WL○ ──── | Access |  ⤶ 40

Q    QB

10 ⤴                                    ⤴ 30
PC○ ── | Charge |          | Amplifier | ──○ PWR

SN

20 ⤴
| Keeper |

Figure 1

EP 3 537 413 A1

Figure 2a

EP 3 537 413 A1

Figure 2b

Start

## Charge

Activate PC signal to precharge Q,QB nodes (active low)

N1,N2 operate in weak inversion mode
P3,P4,P5 operate in strong inversion mode

Q node is charged through P3,P5 and discharged through N1
QB node is charged through P4,P5 and discharged through N2

Depending on the process variation effect, the strength of the transistors (i.e. N1, P3, N2, and P4) drives the state of the Q and QB nodes

Voltage level of SN node slightly increases by the leakage through N1 and N2, that further reduce the strength of the weaker transistors

Two back to back inverters (N1,P3) and (N2,P4)
amplify slight change between Q,QB voltages

Q,QB voltages are split

Deactivate PC signal

Fig. 3b

Figure 3a

## Amplification

Activate PWR signal
(Voltage ramp up)

P3,P4,P5 are deactivated
SN is grounded

Two back to back inverters (N1,P1) and (N2,P2)
amplify voltage difference between V(Q),V(QB)

V(Q),V(QB) reach to logic level '0' and '1' voltages

## Read PUF

Activate WL to read value

Read BL and BLB to get PUF value

End

Figure 3b

Figure 4

Europäisches
Patentamt

European
Patent Office

Office européen
des brevets

# EUROPEAN SEARCH REPORT

**Application Number**

EP 18 00 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/065379 A1 (HOLCOMB DANIEL E [US] ET AL) 3 March 2016 (2016-03-03)<br>* figures 1a,1b,1c *<br>* paragraph [0004] - paragraph [0033] *<br>----- | 1-14 | INV.<br>G09C1/00 |
| X | FR 2 970 591 A1 (CENTRE NAT RECH SCIENT [FR]; UNIV MONTPELLIER 2 [FR])<br>20 July 2012 (2012-07-20)<br>* figures 1,2 *<br>* page 2, line 21 - page 11, line 5 *<br>----- | 1-14 | |
| A | CN 204 291 000 U (UNIV TIANJIN)<br>22 April 2015 (2015-04-22)<br>* figures 1,2 *<br>----- | 1-14 | |

TECHNICAL FIELDS
SEARCHED (IPC)

G09C
H04L

The present search report has been drawn up for all claims

| Place of search | Date of completion of the search | Examiner |
|---|---|---|
| Munich | 2 August 2018 | Bec, Thierry |

EPO FORM 1503 03.82 (P04C01)

## ANNEX TO THE EUROPEAN SEARCH REPORT
## ON EUROPEAN PATENT APPLICATION NO.

EP 18 00 0240

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2018

| Patent document cited in search report | | Publication date | Patent family member(s) | | Publication date |
|---|---|---|---|---|---|
| US 2016065379 | A1 | 03-03-2016 | US 2016065379 A1<br>US 2017373862 A1 | | 03-03-2016<br>28-12-2017 |
| FR 2970591 | A1 | 20-07-2012 | FR 2970591 A1<br>WO 2012098182 A1 | | 20-07-2012<br>26-07-2012 |
| CN 204291000 | U | 22-04-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.P. KULKARNI et al.** A 160 mV, fully differential, robust Schmitt trigger based sub-threshold SRAM. *ILSPED,* 2007, 171-176